# EUROPÄISCHE PATENTSCHRIFT

(11) **EP 3 301 404 B1**
(45) Veröffentlichungstag und Bekanntmachung des Hinweises auf die Patenterteilung: **15.05.2019**
(21) Anmeldenummer: 17190968.2
(22) Anmeldetag: 13.09.2017
(51) Int. Cl.: G01D 5/48, G01D 11/30

(54) **POSITIONSSENSOR**
POSITION SENSOR
CAPTEUR DE POSITION

(30) Priorität: 29.09.2016 DE 102016118522
(43) Veröffentlichungstag der Anmeldung: 04.04.2018
(73) Patentinhaber: SICK ATech GmbH, 58453 Witten (DE)
(72) Erfinder: ISLAM AHMAD, Saiful, 58515 Lüdenscheid (DE)
(74) Vertreter: Manitz Finsterwald Patent- und Rechtsanwaltspartnerschaft mbB

(56) Entgegenhaltungen:
- DE-A1- 10 348 195
- DE-A1-102004 018 818
- US-A1- 2001 017 539
- US-B1- 6 401 883

## Beschreibung

Die vorliegende Erfindung betrifft einen Positionssensor mit einem Wellenleiter aus magnetostriktivem Material, der sich entlang einer Messstrecke erstreckt und zum Leiten von durch Magnetstriktion ausgelösten mechanischen Impulsen ausgebildet ist, und mit einem, insbesondere rohrförmigen, Gehäuse für den Wellenleiter.

Solche Sensoren sind beispielsweise in der DE 197 53 805 C2 und in der Broschüre "Temposonics Position Sensors", 551019 A der Firma MTS (www.mtssensors.com/fileadmin/media/pdfs/551019.pdf) offenbart und werden insbesondere in der industriellen Messtechnik dazu eingesetzt, Positionen, Längen oder zurückgelegte Wege zu messen. Bei dem Wellenleiter kann es sich um einen dünnen Stab, einen Draht oder ein Rohr aus einem ferromagnetischen Material wie zum Beispiel Eisen, Nickel oder Kobalt handeln, der/das zum Beispiel wenige Zentimeter bis mehrere Meter lang sein kann. An dem Bauteil, dessen Position erfasst werden soll, ist üblicherweise ein so genannter "Positionsmagnet", beispielsweise in Form eines Dauermagneten, angebracht, der in dem Wellenleiter ein Magnetfeld erzeugt. Der Positionsmagnet kann beispielsweise ringförmig sein und den Wellenleiter umschließen. Wenn ein elektrischer Strompuls durch den Wellenleiter geschickt wird, wird in der Umgebung des Wellenleiters zusätzlich zu dem durch den Positionsmagneten erzeugten Magnetfeld ein weiteres, zeitlich und örtlich veränderliches Magnetfeld erzeugt. Durch Wechselwirkung der beiden Magnetfelder am Ort des Positionsmagneten kann ein mechanischer Impuls wie zum Beispiel ein Longitudinal- und/oder Torsionsimpuls in dem Wellenleiter erzeugt werden, der sich entlang der Messstrecke bewegt. Ein Messwandler des Positionssensors dient üblicherweise dazu, die von dem Wellenleiter geleiteten mechanischen Impulse in Positionssignale zu wandeln. Der Messwandler kann beispielsweise eine Spule oder ein piezoelektrisches Messelement umfassen. Der Messwandler kann zum Beispiel gestaltet sein wie in der EP 0 882 212 B1 beschrieben. Durch eine Laufzeitmessung des mechanischen Impulses kann letztlich die Position des Positionsmagneten ermittelt werden. Auf dem magnetostriktiven Messprinzip beruhende Positionssensoren arbeiten berührungslos und liefern Absolutwerte. Sie erfordern keine Nachkalibrierung und eignen sich auch für widrige Einsatzbedingungen. Häufig sind sie als Linearwegsensoren ausgestaltet.

Da Positionssensoren der genannten Art oft in rauen Umgebungen eingesetzt werden sollen, beispielsweise in unter Druck stehenden Hydraulikzylindern, muss das Gehäuse für den Wellenleiter relativ stabil und widerstandsfähig sein. Die Messstrecke ist im Allgemeinen relativ lang, typischerweise über einen Meter. Das bedeutet, dass der dünne Wellenleiter über eine so große Strecke in das Gehäuse eingeführt und zentriert werden muss.

Bei bekannten Systemen ist der Wellenleiter von einem Acryl- oder Glasfaserrohr ummantelt, das in dem Gehäuse angeordnet ist. Unvermeidliche Zwischenräume zwischen dem Wellenleiter und der Ummantelung sowie der Ummantelung und dem Gehäuse führen dazu, dass sich der Wellenleiter während des Betriebs bewegt und dabei dezentriert wird. Außerdem hat sich in der Praxis gezeigt, dass die Ummantelungen keinen ausreichenden Schutz gegen Stöße und Schwingungen bieten. Beim Einführen eines Wellenleiters in ein meterlanges Acryl- oder Glasfaserrohr kann es zu einem Knicken oder Verklemmen des Wellenleiters kommen.

In der DE 197 53 805 C2 ist ein Positionssensor offenbart, bei dem der Wellenleiter in einer Lagerung aus Isolierstoff gelagert ist. Bei der Montage wird eine Presshülse gemeinsam mit dem Isolierstoff auf den axialen Endbereich des Wellenleiters aufgepresst.

Die WO 2016/128021 A1 offenbart eine magnetostriktive Wegmessvorrichtung, bei welcher der Wellenleiter in einem elastischen Lagerschlauch gelagert ist, der seinerseits in einem Trägerrohr angeordnet ist.

Magnetostriktive Wegmessvorrichtungen mit elastischen Lagerelementen sind auch in der US 2004/0090225 A1, in der US 2001/0017539 A1 und in der US 6401883 B1 offenbart.

Die DE 10 2004 018 818 A1 offenbart einen Positionssensor mit einem länglichen Hohlprofil, in dem eine Aufnahmenut für einen Wellenleiter ausgebildet ist. Der Wellenleiter ist von einem gezackten Schlauch umgeben, der in die Aufnahmenut eingeklemmt ist.

In der DE 103 48 195 A1 ist ein Positionssensor offenbart, bei dem ein Silikonschlauch auf einen hohlen Wellenleiter aufgeschoben ist.

Es ist eine Aufgabe der Erfindung, einen leicht herstellbaren Positionssensor mit möglichst exakt positioniertem und zuverlässig gehaltenem Wellenleiter bereitzustellen.

Die Lösung der Aufgabe erfolgt durch einen Positionssensor mit den Merkmalen des Anspruchs 1.

Ein erfindungsgemäßer Positionssensor umfasst ein wenigstens bereichsweise elastisches Positionierelement, das unter Verformung in dem Gehäuse gehalten ist und eine Aussparung aufweist, die sich entlang der Messstrecke erstreckt und eine Aufnahme für den Wellenleiter bildet. Das elastische Positionierelement kann als Positionierhilfe bei der Montage des Positionssensors dienen.

Aufgrund der Eigenelastizität des Positionierelements verspannt sich dieses im Gehäuse. Das Positionierelement ist auf diese Weise nach der Montage sicher in dem Gehäuse gehalten, wobei zusätzliche Halterungselemente wie Presshülsen nicht erforderlich sind. Da der Wellenleiter in der an einem definierten Ort vorgesehenen Aussparung aufgenommen ist, ist die Position des Wellenleiters in dem Gehäuse zuverlässig festgelegt. Falls eine Zentrierung des Wellenleiters in dem rohrförmigen Gehäuse gewünscht ist, kann das Positionierelement als Zentrierelement wirken.

Während der Montage kann durch Verwendung des Positionierelements eine Selbstzentrierung des Wellenleiters erfolgen. Die Montage ist insbesondere deshalb vereinfacht, da nicht auf eine Positionierung des Wellenleiters geachtet werden muss, sobald dieser in der Aussparung des Positionierelements aufgenommen ist. Außer einer Positionierung des Wellenleiters in dem Gehäuse bewirkt das Positionierelement auch eine mechanische Dämpfung, die den Wellenleiter vor einer Beeinträchtigung durch Stöße und Schwingungen schützt.

Erfindungsgemäß weist die Aussparung einen sich entlang der Messstrecke erstreckenden Schlitz auf, der in einer Querschnittsebene betrachtet von einem Aufnahmeabschnitt bis an den Rand des Positionierelements reicht und ein seitliches Einlegen des Wellenleiters in den Aufnahmeabschnitt ermöglicht.

Die Erfindung eignet sich besonders gut in Verbindung mit Wellenleitern, die zum Leiten von durch Magnetostriktion ausgelösten Torsionsimpulsen ausgebildet sind.

Der Wellenleiter kann wenigstens abschnittsweise und bevorzugt entlang der gesamten Messstrecke mit geringem Spiel in der Aussparung aufgenommen sein. Dadurch ist sichergestellt, dass sich die durch den magnetostriktiven Effekt hervorgerufenen mechanischen Impulse ungehindert in dem Wellenleiter ausbreiten können und es zu keinen Messwertverfälschungen durch Dämpfung dieser Impulse kommt. Zudem wird ein unerwünschtes Einklemmen oder Komprimieren des Wellenleiters vermieden.

Eine Ausführungsform der Erfindung sieht vor, dass das Positionierelement den in der Aussparung aufgenommenen Wellenleiter in Umfangsrichtung vollständig umschließt, wenn es unter Verformung in dem Gehäuse gehalten ist. Vorzugsweise besteht das vollständige Umschließen entlang der gesamten Messstrecke. Der Wellenleiter ist auf diese Weise sicher positioniert und geschützt.

Es kann vorgesehen sein, dass das Positionierelement sich bezogen auf eine Querschnittsebene des Positionssensors nicht vollständig umlaufend an einer Innenwand des Gehäuses oder an einem an der Innenwand anliegenden Zusatzbauteil abstützt, wenn es unter Verformung in dem Gehäuse gehalten ist. Die Freiräume zwischen den Stützbereichen, die sich axial bevorzugt entlang der gesamten Messstrecke erstrecken, können zur Unterbringung elektrischer Leitungen und/oder eines parallel zum Wellenleiter verlaufenden Rückleiters genutzt werden. Grundsätzlich kann auch eine vollflächige Abstützung des Positionierelements an der Innenwand des Gehäuses oder an einem an der Innenwand anliegenden Zusatzbauteil vorgesehen sein.

Gemäß einer weiteren Ausführungsform der Erfindung ist die Aussparung zu einer Längsseite des Positionierelements hin offen, wenn sich das Positionierelement in einem unverformten Ausgangszustand befindet. Es ist dann bei der Montage nicht erforderlich, den Wellenleiter in axialer Richtung in die Aussparung einzufädeln. Vielmehr kann in einfacher Weise ein Einlegen des Wellenleiters in die Aussparung von der Längsseite her erfolgen.

Eine spezielle Ausgestaltung der Erfindung sieht vor, dass die Aussparung eine schlüssellochartige Querschnittsform aufweist, wenn sich das Positionierelement in einem unverformten Ausgangszustand befindet. Dies ist insofern von Vorteil, als sich der schmale, schlitzartige Abschnitt einer solchen Aussparung beim Verformen des Positionierelements schließt und somit für ein vollständiges Umschließen des Wellenleiters in Umfangsrichtung sorgt, wohingegen der breite zentrale Abschnitt offen bleibt und die Aufnahme für den Wellenleiter bildet. Grundsätzlich könnte die Aussparung auch eine rechteckige, dreieckige oder trapezartige Querschnittsform aufweisen.

Bevorzugt weist das Positionierelement eine trapezartige äußere Querschnittsform auf, wenn es sich in einem unverformten Ausgangszustand befindet. Bei einer solchen Formgebung bilden sich automatisch Lücken oder Freiräume zwischen den in den Eckbereichen befindlichen Stützstellen, welche zur Unterbringung elektrischer Leitungen und/oder eines Rückleiters nutzbar sind. Vorzugsweise befindet sich die längere Trapezseite an einer Längsseite des Positionierelements, an welcher sich eine Öffnung der Aussparung befindet. Bei einem Schließen der Öffnung verkleinert sich die Längsseite, so dass sie z. B. zumindest im Wesentlichen die Größe der anderen Längsseite einnimmt. Prinzipiell könnte das Positionierelement auch eine runde oder ovale äußere Querschnittsform aufweisen, um z. B. ein vollflächiges Anliegen an der Innenwand eines Gehäuses mit rundem oder ovalem Querschnitt zu unterstützen.

Es kann vorgesehen sein, dass die Aussparung einen Aufnahmeabschnitt aufweist, der bezüglich eines Querschnitts des Gehäuses zentral angeordnet ist. Ein solches Positionierelement bewirkt eine Selbstzentrierung des Wellenleiters in dem Gehäuse des Positionssensors.

Gemäß einer weiteren Ausführungsform der Erfindung ist das Positionierelement vollständig aus einem elastischen Material gefertigt. Dies ermöglicht eine besonders einfache Herstellung.

Vorzugsweise ist das Positionierelement, insbesondere vollständig, aus einem nichtmagnetischen Material gefertigt, um Messwertbeeinflussungen zu vermeiden.

Bevorzugt ist das Positionierelement aus einem Material gefertigt, das ein Polymer oder mehrere Polymere, insbesondere Silikon, umfasst. Solche Materialien weisen insbesondere eine hohe Flexibilität und Elastizität auf.

Das Positionierelement kann als Extrusionsprofil ausgeführt sein. Dies ermöglicht eine besonders einfache und kostengünstige Herstellung.

Eine weitere Ausführungsform der Erfindung sieht vor, dass das Positionierelement in einem wenigstens bereichsweise flexiblen Zwischenrohr aufgenommen ist, welches seinerseits an einer Innenwand des Gehäuses anliegt. Das flexible Zwischenrohr kann insbesondere als Einführhilfe bei der Montage des Positionssensors dienen. Es kann vorgesehen sein, dass das Zwischenrohr vollflächig an der Innenwand des Gehäuses anliegt.

Vorzugsweise ist das Zwischenrohr aus einem reibungsmindernden Material gefertigt und/oder weist eine reibungsmindernde Beschichtung auf. Dies erleichtert das Einführen des Positionierelements in das Zwischenrohr und/oder das Einführen des Positionierelements mit dem Zwischenrohr in das Gehäuse.

Das Zwischenrohr kann wenigstens zum Teil aus Polytetrafluorethylen oder aus Silikon gefertigt sein. Diese Materialien weisen eine besonders ausgeprägte reibungsmindernde Wirkung auf.

Das Zwischenrohr kann wenigstens einen Schlitz aufweisen, der sich entlang der Messstrecke erstreckt. Bei Bedarf kann ein solcher Schlitz zum seitlichen Einführen des Positionierelements in das Zwischenrohr genutzt werden. Zudem kann der Schlitz für eine ausreichende Flexibilität des Zwischenrohrs in radialer Richtung sorgen.

Vorzugsweise ist das Zwischenrohr dünnwandig ausgeführt. Beispielsweise kann das Zwischenrohr eine Wandstärke im Bereich von Millimeterbruchteilen aufweisen.

Es kann auch vorgesehen sein, dass das Positionierelement in einer Anordnung aus wenigstens zwei separaten und wenigstens bereichsweise flexiblen Schalenelementen aufgenommen ist, welche ihrerseits an einer Innenwand des Gehäuses anliegt. Dies erleichtert die Montage insofern, als die Schalenelemente lediglich von außen an das Positionierelement anzulegen sind.

Eine weitere Ausführungsform der Erfindung sieht vor, dass das Gehäuse aus einem starren nichtmagnetischen Material, insbesondere aus Edelstahl, gefertigt ist. Dies ermöglicht den Einsatz des Positionssensors in besonders rauen Umgebungen, beispielsweise im Hydrauliköl eines Hydraulikzylinders. Alternativ kann das Gehäuse aus Aluminium oder aus Kunststoff gefertigt sein.

Die Erfindung betrifft auch ein Verfahren zum Herstellen eines wie vorstehend beschriebenen Positionssensors, bei dem folgende Schritte vorgesehen sind: Bereitstellen eines Positionierelements in einem unverformten Ausgangszustand; Einführen des Wellenleiters in die Aussparung des Positionierelements; und Einführen des Positionierelements mit dem in der Aussparung aufgenommenen Wellenleiter unter Verformung des Positionierelements in das Gehäuse.

Der Wellenleiter wird also nicht direkt in das Gehäuse eingeführt, sondern unter Zuhilfenahme eines Positionierelements, welches für eine korrekte Ausrichtung des Wellenleiters im Gehäuse sorgt und darüber hinaus Stöße und Schwingungen dämpft.

Erfindungsgemäß ist vorgesehen, dass das Einführen des Wellenleiters in die Aussparung des Positionierelements in radialer Richtung durch einen entlang der Messstrecke verlaufenden Schlitz des Positionierelements hindurch erfolgt. Dies kann wesentlich schneller und einfacher durchgeführt werden als ein axiales Einfädeln des Wellenleiters in eine in Umfangsrichtung geschlossene Aussparung.

Vorzugsweise wird das Positionierelement mit dem in der Aussparung aufgenommenen Wellenleiter in ein flexibles Zwischenrohr eingeführt und dann mitsamt diesem in das Gehäuse eingeführt. Das flexible Zwischenrohr wirkt reibungsmindernd und erleichtert so das Einschieben des Positionierelements mit dem Wellenleiter in das Gehäuse über eine längere Strecke. Das Einführen des Positionierelements in das Zwischenrohr kann insbesondere durch einen seitlichen Schlitz des Zwischenrohrs erfolgen.

Weiterbildungen der Erfindung sind auch in den abhängigen Ansprüchen, der Beschreibung sowie den beigefügten Zeichnungen angegeben.

Die Erfindung wird nachfolgend beispielhaft unter Bezugnahme auf die Zeichnungen beschrieben.
- Fig. 1: ist eine Explosionsdarstellung eines erfindungsgemäßen Positionssensors.
- Fig. 2: ist eine Querschnittsansicht eines Positionierelements und eines Wellenleiters eines erfindungsgemäßen Positionssensors, wobei sich das Positionierelement in einem unver-formten Ausgangszustand befindet.
- Fig. 3: zeigt die Anordnung gemäß Fig. 2 nach Einführung in ein Zwischenrohr.
- Fig. 4: zeigt die in Fig. 3 gezeigte Anordnung nach Einführung in ein Wellenleitergehäuse.
- Fig. 5: zeigt die in Fig. 2 gezeigte Anordnung zusammen mit zwei Zwischenschalen.
- Fig. 6: zeigt ein alternativ gestaltetes Positionierelement, welches eine im Querschnitt rechteckige Aussparung aufweist.
- Fig. 7: zeigt ein alternativ gestaltetes Positionierelement, welches einen runden Außenquerschnitt und eine im Querschnitt trapezförmige Aussparung aufweist.

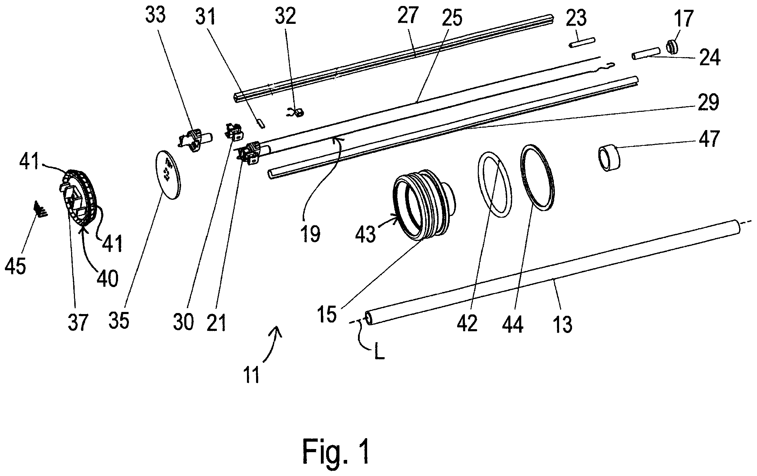

Der in Fig. 1 in Explosionsdarstellung gezeigte Positionssensor 11 umfasst ein Wellenleitergehäuse 13 in Form eines langgestreckten Rohrs aus Edelstahl, an dessen einem Rohrende ein Sensorkopfgehäuse 15 angebracht ist. Das andere Rohrende ist durch eine Endkappe 17 verschlossen. In dem Wellenleitergehäuse 13 befindet sich ein Wellenleiter 19 aus einem magnetostriktiven Material. Der Wellenleiter 19 ist vorzugsweise ein Draht aus ferromagnetischem Material und erstreckt sich ausgehend von einer Steuerungseinheit 21 axial, das heißt parallel zur Längsachse L des Wellenleitergehäuses 13 durch dieses hindurch bis zu einem Dämpfungselement 23, das unter Verwendung einer Hülse 24 in dem Wellenleitergehäuse 13 gehalten ist. Im Bereich des Dämpfungselements 23 geht der Wellenleiter 19 in einen Rückleiter 25 über, der wieder zur Steuerungseinheit 21 zurückführt. Der Wellenleiter 19 ist mittels eines Positionierelements 27 und eines Zwischenrohrs 29 in dem Wellenleitergehäuse 13 gehalten, wie nachfolgend noch näher ausgeführt wird.

Der Steuerungseinheit 21 ist ein Messwandler 30 zugeordnet, der einen am Wellenleiter 19 festgelöteten Stabmagneten 31 und eine diesen umschließende Spule 32 umfasst. Der Messwandler 30 ist in der Lage, von dem Wellenleiter 19 geleitete Torsionsimpulse in elektrische Positionssignale zu wandeln, wie dies grundsätzlich bekannt ist - beispielsweise aus der EP 0 882 212 B1. Dem Messwandler 30 ist eine Messwandler-Aufnahme 33 zugeordnet, die ebenso wie die Steuerungseinheit 21 an einer Leiterplatte 35 angebracht ist. Folgende Einzelteile der Steuerungseinheit 21 sind in Fig. 1 der Übersichtlichkeit halber seitlich neben der Steuerungseinheit 21 noch einmal gesondert dargestellt: Messwandler 30, Stabmagnet 31, Spule 32 und Messwandler-Aufnahme 33.

Die Leiterplatte 35 mit den daran montierten Komponenten ist im Sensorkopfgehäuse 15 untergebracht. Dieses ist durch ein Deckelteil 37 verschlossen, welches an seinem Rand 40 mit Rastzähnen 41 versehen ist. Die Rastzähne 41 sind zum Hintergreifen eines nach innen vorstehenden Wulstes 43 des Sensorkopfgehäuses 15 ausgebildet. Das Deckelteil 37 kann somit auf das Sensorkopfgehäuse 15 aufgesteckt und beim Aufstecken dauerhaft mit diesem verrastet werden. Das Sensorkopfgehäuse 15 kann unter Verwendung eines Dichtrings 42 und eines Stützrings 44 in einen Hydraulikzylinder eingebaut werden, wie dies zum Beispiel in der DE 20 2006 012 815 U1 offenbart ist.

Für den Anschluss des Positionssensors 11 an eine Stromversorgung und an eine Empfangseinheit (beide nicht dargestellt) sind Kontaktstifte 45 am Deckelteil 37 vorgesehen. Diese sind wie dargestellt abgewinkelt, um das Anschließen eines Verbindungssteckers oder einer Verbindungsbuchse von der Seite aus zu ermöglichen. Die durch den Positionssensor 11 zu erfassende Position ist durch einen Positionsmagneten 47 markiert, der hier ringförmig ist und das Wellenleitergehäuse 13 umschließt. Der Positionsmagnet 47 ist an einem nicht dargestellten Bauteil befestigt, dessen Position erfasst werden soll, z. B. an einem verschiebbaren Kolben eines Hydraulikzylinders.

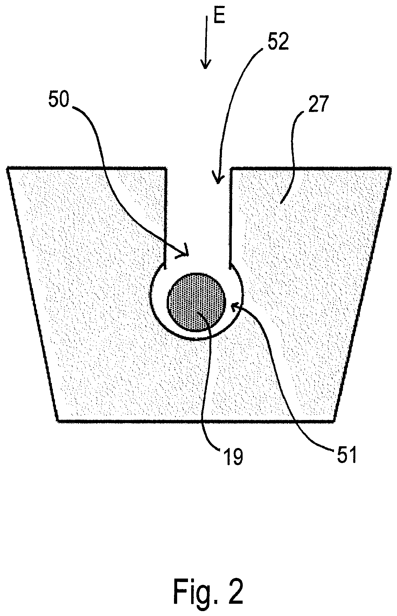

Fig. 2 zeigt den Wellenleiter 19 und das Positionierelement 27 in einer Querschnittsansicht. Das Positionierelement 27 ist aus einem elastischen und nichtmagnetischen Material, z. B. aus Silikon, gefertigt und daher verformbar. Wenn es sich wie in Fig. 2 gezeigt in einem unverformten Ausgangszustand befindet, weist es eine trapezartige äußere Querschnittsform auf. Eine Aussparung 50 mit schlüssellochartiger Querschnittsform erstreckt sich in axialer Richtung durch das gesamte Positionierelement 27 hindurch. Der Wellenleiter 19 ist in dem breiten Aufnahmeabschnitt 51 der Aussparung 50 angeordnet. Der schmale Einführabschnitt 52 der Aussparung 50 erstreckt sich bis zum Rand des Positionierelements 27, so dass der Wellenleiter 19 in einer radialen Einführrichtung E in das Positionierelement 27 eingeführt werden kann.

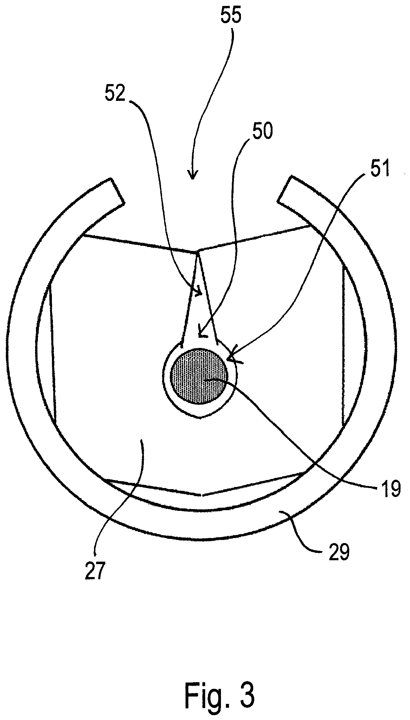

Bei der Herstellung wird das Positionierelement 27 mit dem eingelegten Wellenleiter 19 in das Zwischenrohr 29 eingeführt, wie dies in Fig. 3 gezeigt ist. Dabei kommt es zu einer Verformung des Positionierelements 27 und insbesondere zu einem Schließen des schmalen Abschnitts 52. Der Einführvorgang ist dadurch erleichtert, dass das Zwischenrohr 29 aus Polytetrafluorethylen gefertigt ist und einen Längsschlitz 55 aufweist, der sich axial durch das ganze Zwischenrohr 29 hindurch erstreckt.

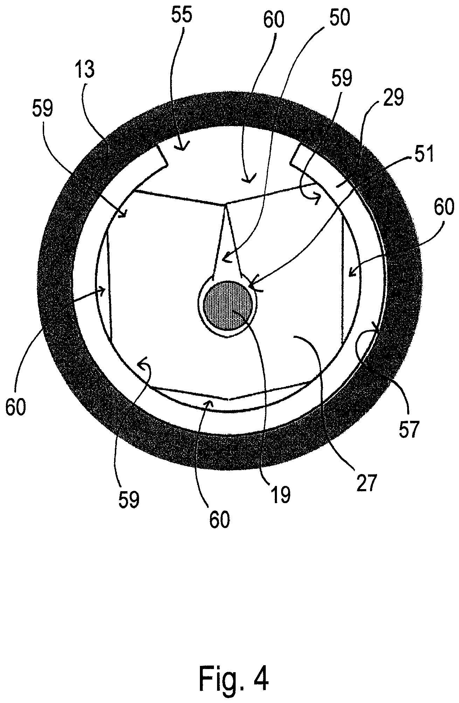

Die durch den Wellenleiter 19, das Positionierelement 27 und das Zwischenrohr 29 gebildete Einheit wird von einem Ende her in das Wellenleitergehäuse 13 eingeführt, bis der in Fig. 4 gezeigte Zustand erreicht ist. Die Flexibilität des mit dem Längsschlitz 55 versehenen Zwischenrohrs 29 sowie die reibungsmindernden Eigenschaften des Polytetrafluorethylen erleichtern den Einführvorgang. Nach dem Einführen liegt das Zwischenrohr 29 vollflächig an der Innenwand 57 des Gehäuses 13 an. Aufgrund des trapezförmigen Außenquerschnitts des Positionierelements 27 liegt dieses nicht vollflächig an dem Zwischenrohr 29 an, sondern lediglich an den Eckbereichen 59. Zwischen diesen sind Freiräume 60 gebildet, die zum Durchführen von elektrischen Leitungen sowie des Rückleiters 25 (Fig. 1) genutzt werden können. Durch das Positionierelement 27 sowie das Zwischenrohr 29 ist der Wellenleiter 19 einerseits zentriert in dem Wellenleitergehäuse 13 gehalten und andererseits vor übermäßigen Auslenkungen, Stößen und Schwingungen geschützt.

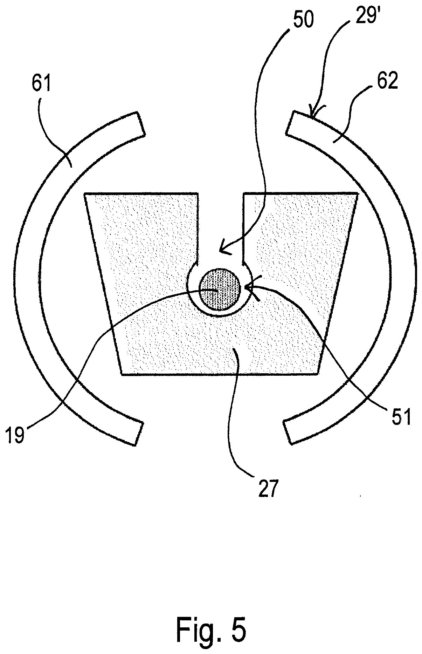

Fig. 5 zeigt eine alternative Ausführungsform der Erfindung, bei welcher anstelle eines Zwischenrohrs eine Anordnung 29' aus zwei separaten Schalenelementen 61, 62 vorgesehen ist.

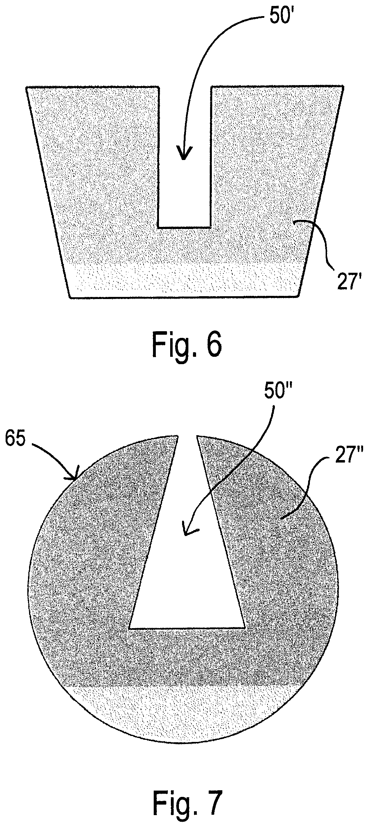

Fig. 6 zeigt ein Positionierelement 27', dessen Aussparung 50' einen rechteckigen Querschnitt anstelle eines schlüssellochartigen Querschnitts aufweist. Bei dem in Fig. 7 gezeigten Positionierelement 27" weist die Aussparung 50" anstelle einer schlüssellochartigen Querschnittsform eine trapezartige Querschnittsform auf. Darüber hinaus ist die äußere Querschnittsform des in Fig. 7 gezeigten Positionierelements 27" kreisrund anstatt trapezförmig. Dies kann in bestimmten Anwendungssituationen von Vorteil sein. Bei dieser Ausgestaltung liegt die Außenfläche 65 des Positionierelements 27" vollflächig am Innenrohr an, wenn dieses einen runden Innenquerschnitt aufweist.

Eine nicht dargestellte Ausführungsform sieht vor, dass das Positionierelement 27 direkt, d.h. ohne Verwendung eines Zwischenrohrs, in das Wellenleitergehäuse 13 eingeführt ist. Insbesondere bei einem relativ kurzen Wellenleitergehäuse 13 ist es nämlich nicht zwingend notwendig, ein Zwischenrohr als Einführhilfe zu verwenden.

Die beschriebenen Positionierelemente 27, 27', 27" können als Extrusionsprofile ausgeführt sein, wodurch sich eine besonders kostengünstige Herstellung ergibt.

Zum Herstellen eines erfindungsgemäßen Positionssensors 11 wird zunächst ein Positionierelement 27, 27', 27" in einem unverformten Ausgangszustand bereitgestellt. Der geradlinig ausgerichtete Wellenleiter 19 wird dann von der Seite aus in die Aussparung 50, 50', 50" eingeführt. Das Positionierelement 27, 27', 27" mit dem aufgenommenen Wellenleiter 19 wird anschließend in das Zwischenrohr 29 eingeführt und mitsamt diesem in das Wellenleitergehäuse 13 eingeschoben.

Die Erfindung ermöglicht die Selbstzentrierung eines magnetostriktiven Wellenleiters 19 in einem Wellenleitergehäuse 13, ohne hierbei eine unerwünschte Dämpfung der Wellenausbreitung zu riskieren. Zudem wird die Montage eines auf dem magnetostriktiven Prinzip beruhenden Positionssensors 11 erheblich vereinfacht.

### Bezugszeichenliste

- 11: Positionssensor
- 13: Wellenleitergehäuse
- 15: Sensorkopfgehäuse
- 17: Endkappe
- 19: Wellenleiter
- 21: Steuerungseinheit
- 23: Dämpfungselement
- 24: Hülse
- 25: Rückleiter
- 27, 27', 27": Positionierelement
- 29: Zwischenrohr
- 29': Anordnung
- 30: Messwandler
- 31: Stabmagnet
- 32: Spule
- 33: Messwandler-Aufnahme
- 35: Leiterplatte
- 37: Deckelteil
- 40: Rand
- 41: Rastzahn
- 42: Dichtring
- 43: Wulst
- 44: Stützring
- 45: Kontaktstift
- 47: Positionsmagnet
- 50, 50', 50": Aussparung
- 51: Aufnahmeabschnitt
- 52: Einführabschnitt
- 55: Längsschlitz
- 57: Innenwand
- 59: Eckbereich
- 60: Freiraum
- 61, 62: Schalenelement
- 65: Außenfläche

- E: Einführrichtung
- L: Längsachse

## Patentansprüche

1. Positionssensor (11) mit einem Wellenleiter (19) aus magnetostriktivem Material, der sich entlang einer Messstrecke erstreckt und zum Leiten von durch Magnetostriktion ausgelösten mechanischen Impulsen ausgebildet ist, mit einem, insbesondere rohrförmigen, Gehäuse (13) für den Wellenleiter (19),
und mit einem wenigstens bereichsweise elastischen Positionierelement (27, 27', 27"), das unter Verformung in dem Gehäuse (13) gehalten ist und eine Aussparung (50, 50', 50") aufweist, die sich entlang der Messstrecke erstreckt und eine Aufnahme für den Wellenleiter (19) bildet,
**dadurch gekennzeichnet, dass**
die Aussparung (50, 50', 50") einen sich entlang der Messstrecke erstreckenden Schlitz (52) aufweist, der in einer Querschnittsebene betrachtet von einem Aufnahmeabschnitt (51) bis an den Rand des Positionierelements (27, 27', 27") reicht und ein seitliches Einlegen des Wellenleiters (19) in den Aufnahmeabschnitt (51) ermöglicht.

2. Positionssensor nach Anspruch 1,
**dadurch gekennzeichnet, dass**
der Wellenleiter (19) wenigstens abschnittsweise und bevorzugt entlang der gesamten Messstrecke mit Spiel in der Aussparung (50, 50', 50") aufgenommen ist.

3. Positionssensor nach Anspruch 1 oder 2,
**dadurch gekennzeichnet, dass**
das Positionierelement (27, 27', 27") den in der Aussparung (50, 50', 50") aufgenommenen Wellenleiter (19) in Umfangsrichtung vollständig umschließt, wenn es unter Verformung in dem Gehäuse (13) gehalten ist.

4. Positionssensor nach zumindest einem der vorstehenden Ansprüche,
**dadurch gekennzeichnet, dass**
das Positionierelement (27, 27', 27") sich bezogen auf eine Querschnittsebene des Positionssensors (11) nicht vollständig umlaufend an einer Innenwand (57) des Gehäuses (13) oder an einem an der Innenwand (57) anliegenden Zusatzbauteil (29, 29') abstützt, wenn es unter Verformung in dem Gehäuse (13) gehalten ist.

5. Positionssensor nach zumindest einem der vorstehenden Ansprüche,
**dadurch gekennzeichnet, dass**
die Aussparung (50, 50', 50") zu einer Längsseite des Positionierelements (27, 27', 27") hin offen ist, wenn sich das Positionierelement (27, 27', 27") in einem unverformten Ausgangszustand befindet.

6. Positionssensor nach zumindest einem der vorstehenden Ansprüche,
**dadurch gekennzeichnet, dass**
die Aussparung (50) eine schlüssellochartige Querschnittsform aufweist, wenn sich das Positionierelement (27) in einem unverformten Ausgangszustand befindet.

7. Positionssensor nach zumindest einem der vorstehenden Ansprüche,
**dadurch gekennzeichnet, dass**
das Positionierelement (27, 27') eine trapezartige äußere Querschnittsform aufweist, wenn es sich in einem unverformten Ausgangszustand befindet.

8. Positionssensor nach zumindest einem der vorstehenden Ansprüche,
**dadurch gekennzeichnet, dass**
die Aussparung (50, 50', 50") einen Aufnahmeabschnitt (51) aufweist, der bezüglich eines Querschnitts des Gehäuses (13) zentral angeordnet ist.

9. Positionssensor nach zumindest einem der vorstehenden Ansprüche,
**dadurch gekennzeichnet, dass**
das Positionierelement (27, 27', 27") vollständig aus einem elastischen Material gefertigt ist und/oder
das Positionierelement (27, 27', 27"), insbesondere vollständig, aus einem nichtmagnetischen Material gefertigt ist und/oder das Positionierelement (27, 27', 27") aus einem Material gefertigt ist, das ein Polymer oder mehrere Polymere, insbesondere Silikon, umfasst und/oder
das Positionierelement (27, 27', 27") als Extrusionsprofil ausgeführt ist.

10. Positionssensor nach zumindest einem der vorstehenden Ansprüche,
**dadurch gekennzeichnet, dass**
das Positionierelement (27, 27', 27") in einem wenigstens bereichsweise flexiblen Zwischenrohr (29) aufgenommen ist, welches seinerseits an einer Innenwand (57) des Gehäuses (13) anliegt.

11. Positionssensor nach Anspruch 10,
**dadurch gekennzeichnet, dass**
das Zwischenrohr (29) aus einem reibungsmindernden Material gefertigt ist und/oder das Zwischenrohr (29) eine reibungsmindernde Beschichtung aufweist und/oder
das Zwischenrohr (29) wenigstens zum Teil aus Polytetrafluorethylen oder aus Silikon gefertigt ist und/oder
das Zwischenrohr (29) wenigstens einen Schlitz (55) aufweist, der sich entlang der Messstrecke erstreckt.

12. Positionssensor nach zumindest einem der vorstehenden Ansprüche,
**dadurch gekennzeichnet, dass**
das Positionierelement (27, 27', 27") in einer Anordnung (29') aus wenigstens zwei separaten und wenigstens bereichsweise flexiblen Schalenelementen (61, 62) aufgenommen ist, welche ihrerseits an einer Innenwand (57) des Gehäuses (13) anliegt.

13. Positionssensor nach zumindest einem der vorstehenden Ansprüche,
**dadurch gekennzeichnet, dass**
das Gehäuse (13) aus einem starren nichtmagnetischen Material, insbesondere aus Edelstahl, gefertigt ist.

14. Verfahren zum Herstellen eines Positionssensors (11) nach einem der vorstehenden Ansprüche,
mit den Schritten:
Bereitstellen des Positionierelements (27, 27', 27") in einem unverformten Ausgangszustand;
Einführen des Wellenleiters (19) in die Aussparung (50, 50', 50") des Positionierelements (27, 27', 27"); und
Einführen des Positionierelements (27, 27', 27") mit dem in der Aussparung (50, 50', 50") aufgenommenen Wellenleiter (19) unter Verformung des Positionierelements (27, 27', 27") in das Gehäuse (13),
**dadurch gekennzeichnet, dass**
das Einführen des Wellenleiters (19) in die Aussparung (50, 50', 50") des Positionierelements (27, 27', 27") in radialer Richtung durch einen entlang der Messstrecke verlaufenden Schlitz (52) des Positionierelements (27, 27', 27") hindurch erfolgt.

15. Verfahren nach Anspruch 14,
**dadurch gekennzeichnet, dass**
das Positionierelement (27, 27', 27") mit dem in der Aussparung (50, 50', 50") aufgenommenen Wellenleiter (19) in ein flexibles Zwischenrohr (29) eingeführt und dann mitsamt diesem in das Gehäuse (13) eingeführt wird.

## Claims

1. A position sensor (11) having a waveguide (19) of magnetostrictive material, said waveguide (19) extending along a measurement path and being configured for conducting mechanical pulses triggered by magnetostriction; having a housing, in particular a tubular housing (13), for the waveguide (19);
and having a positioning element (27, 27', 27") which is elastic at least regionally; which is held in the housing (13) while being deformed; and which has a recess (50, 50', 50") which extends along the measurement path and forms a receiver for the waveguide (19),
**characterized in that**
the recess (50, 50', 50") has a slit (52) which extends along the measurement path; which, viewed in a cross-sectional plane, reaches from a reception section (51) up to a boundary of the positioning element (27, 27', 27"); and which enables a lateral insertion of the waveguide (19) into the reception section (51).

2. A position sensor in accordance with claim 1,
**characterized in that**
the waveguide (19) is received with clearance in the recess (50, 50', 50") at least sectionally and preferably along the total measurement path.

3. A position sensor in accordance with claim 1 or claim 2,
**characterized in that**
the positioning element (27, 27', 27") completely surrounds the waveguide (19) received in the recess (50, 50', 50") in a peripheral direction when said positioning element (27, 27', 27") is held in the housing (13) while being deformed.

4. A position sensor in accordance with at least one of the preceding claims,
**characterized in that**,
with respect to a cross-sectional plane of the position sensor (11), the positioning element (27, 27', 27") is not completely peripherally supported at an inner wall (57) of the housing (13) or at an additional component (29, 29') contacting the inner wall (57) when said positioning element (27, 27', 27") is held in the housing (13) while being deformed.

5. A position sensor in accordance with at least one of the preceding claims,
**characterized in that**
the recess (50, 50', 50") is open toward a longitudinal side of the positioning element (27, 27', 27") when the positioning element (27, 27', 27") is in an undeformed starting state.

6. A position sensor in accordance with at least one of the preceding claims,
**characterized in that**
the recess (50) has a cross-sectional shape in the form of a keyhole when the positioning element (27) is in an undeformed starting state.

7. A position sensor in accordance with at least one of the preceding claims,
**characterized in that**
the positioning element (27, 27') has a trapeze-like outer cross-sectional shape when it is in an undeformed starting state.

8. A position sensor in accordance with at least one of the preceding claims,
**characterized in that**
the recess (50, 50', 50") has a reception section (51) which is arranged centrally with respect to a cross-section of the housing (13).

9. A position sensor in accordance with at least one of the preceding claims, **characterized in that**
the positioning element (27, 27', 27") is completely produced from an elastic material; and/or
**in that** the positioning element (27, 27', 27") is produced, in particular completely produced, from a non-magnetic material; and/or
**in that** the positioning element (27, 27', 27") is produced from a material which comprises a polymer or a plurality of polymers, in particular silicone; and/or
**in that** the positioning element (27, 27', 27") is configured as an extruded profile.

10. A position sensor in accordance with at least one of the preceding claims,
**characterized in that**
the positioning element (27, 27', 27") is received in an intermediate pipe (29) which is flexible at least regionally and which in turn contacts an inner wall (57) of the housing (13).

11. A position sensor in accordance with claim 10,
**characterized in that**
the intermediate pipe (29) is produced from a friction-reducing material and/or the intermediate pipe (29) has a friction-reducing coating; and/or in that the intermediate pipe (29) is at least partly produced from polytetrafluoroethylene or from silicone; and/or
**in that** the intermediate pipe (29) has at least one slit (55) which extends along the measurement path.

12. A position sensor in accordance with at least one of the preceding claims,
**characterized in that**
the positioning element (27, 27', 27") is received in an arrangement (29') of at least two separate and at least regionally flexible shell elements (61, 62) which in turn contact an inner wall (57) of the housing (13).

13. A position sensor in accordance with at least one of the preceding claims,
**characterized in that**
the housing (13) is produced from a rigid non-magnetic material, in particular from stainless steel.

14. A method of manufacturing a position sensor (11) in accordance with any one of the preceding claims,
comprising the steps:
providing the positioning element (27, 27', 27") in an undeformed starting state;
introducing the waveguide (19) into the recess (50, 50', 50") of the positioning element (27, 27', 27"); and
introducing the positioning element (27, 27', 27") with the waveguide (19) received in the recess (50, 50', 50") into the housing (13) while deforming the positioning element (27, 27', 27"),
**characterized in that**
the introduction of the waveguide (19) into the recess (50, 50', 50") of the positioning element (27, 27', 27") takes place in a radial direction through a slit (52) of the positioning element (27, 27', 27") extending along the measurement path.

15. A method in accordance with claim 14,
**characterized in that**
the positioning element (27, 27', 27") is introduced with the waveguide (19) received in the recess (50, 50', 50") into a flexible intermediate pipe (29) and is then introduced into the housing (13) together with said intermediate pipe (29).

## Revendications

1. Capteur de position (11) comportant un guide d'ondes (19) en matériau magnétostrictif qui s'étend le long d'un trajet de mesure et qui est réalisé pour conduire des impulsions mécaniques déclenchées par magnétostriction, comportant un boîtier (13) en particulier tubulaire pour le guide d'ondes (19), et
comportant un élément de positionnement (27, 27', 27") au moins localement élastique qui est maintenu sous déformation dans le boîtier (13) et qui présente une échancrure (50, 50', 50") qui s'étend le long du trajet de mesure et qui constitue un logement pour le guide d'ondes (19),
**caractérisé en ce que**
l'échancrure (50, 50', 50") présente une fente (52) qui s'étend le long du trajet de mesure et qui, vue dans un plan de section transversale, va d'une portion de logement (51) jusqu'au bord de l'élément de positionnement (27, 27', 27") et permet une insertion latérale du guide d'ondes (19) dans la portion de logement (51).

2. Capteur de position selon la revendication 1,
**caractérisé en ce que**
le guide d'ondes (19) est logé avec jeu dans l'échancrure (50, 50', 50") au moins localement et de préférence le long de tout le trajet de mesure.

3. Capteur de position selon la revendication 1 ou 2,
**caractérisé en ce que**
l'élément de positionnement (27, 27', 27") enferme en direction périphérique complètement le guide d'ondes (19) logé dans l'échancrure (50, 50', 50") lorsqu'il est maintenu sous déformation dans le boîtier (13).

4. Capteur de position selon l'une au moins des revendications précédentes,
**caractérisé en ce que**
l'élément de positionnement (27, 27', 27") prend appui contre une paroi intérieure (57) du boîtier (13) ou contre un composant supplémentaire (29, 29') appliqué contre la paroi intérieur (57), en ne s'étendant pas complètement sur la périphérie, par rapport à un plan de section transversale du capteur de position (11), lorsqu'il est maintenu sous déformation dans le boîtier (13).

5. Capteur de position selon l'une au moins des revendications précédentes,
**caractérisé en ce que**
l'échancrure (50, 50', 50") est ouverte vers un côté longitudinal de l'élément de positionnement (27, 27', 27") lorsque l'élément de positionnement (27, 27', 27") se trouve dans un état de départ non déformé.

6. Capteur de position selon l'une au moins des revendications précédentes,
**caractérisé en ce que**
l'échancrure (50) présente une forme de section transversale en forme de trou de serrure lorsque l'élément de positionnement (27) se trouve dans un état de départ non déformé.

7. Capteur de position selon l'une au moins des revendications précédentes,
**caractérisé en ce que**
l'élément de positionnement (27, 27') présente une forme extérieure de section transversale en forme trapézoïdale lorsqu'il se trouve dans un état de départ non déformé.

8. Capteur de position selon l'une au moins des revendications précédentes,
**caractérisé en ce que**
l'échancrure (50, 50', 50") présente une portion de logement (51) qui est agencée au centre par rapport à une section transversale du boîtier (13).

9. Capteur de position selon l'une au moins des revendications précédentes,
**caractérisé en ce que**
l'élément de positionnement (27, 27', 27") est fabriqué complètement en un matériau élastique, et/ou
l'élément de positionnement (27, 27', 27") est fabriqué en particulier complètement en un matériau non magnétique, et/ou
l'élément de positionnement (27, 27', 27") est fabriqué en un matériau qui contient un polymère ou plusieurs polymères, en particulier du silicone, et/ou
l'élément de positionnement (27, 27', 27") est réalisé sous forme de profilé extrudé.

10. Capteur de position selon l'une au moins des revendications précédentes,
**caractérisé en ce que**
l'élément de positionnement (27, 27', 27") est logé dans un tube intermédiaire (29) au moins localement flexible qui s'appuie à son tour contre une paroi intérieure (57) du boîtier (13).

11. Capteur de position selon la revendication 10,
**caractérisé en ce que**
le tube intermédiaire (29) est fabriqué d'un matériau de réduction de frottement, et/ou
le tube intermédiaire (29) présente un revêtement de réduction de frottement, et/ou
le tube intermédiaire (29) est fabriqué au moins en partie en polytétrafluoroéthylène ou en silicone, et/ou
le tube intermédiaire (29) présente au moins une fente (55) qui s'étend le long du trajet de mesure.

12. Capteur de position selon l'une au moins des revendications précédentes,
**caractérisé en ce que**
l'élément de positionnement (27, 27', 27") est logé dans un ensemble (29') constitué d'au moins deux éléments en coque (61, 62) séparés et au moins localement flexibles, qui s'appuie à son tour contre une paroi intérieure (57) du boîtier (13).

13. Capteur de position selon l'une au moins des revendications précédentes,
**caractérisé en ce que**
le boîtier (13) est fabriqué en un matériau rigide non magnétique, en particulier en acier inoxydable.

14. Procédé de réalisation d'un capteur de position (11) selon l'une des revendications précédentes, comprenant les étapes consistant à :
fournir l'élément de positionnement (27, 27', 27") dans un état de départ non déformé ;
insérer le guide d'ondes (19) dans l'échancrure (50, 50', 50") de l'élément de positionnement (27, 27', 27") ; et
insérer l'élément de positionnement (27, 27', 27") avec le guide d'ondes (19), logé dans l'échancrure (50, 50', 50"), jusque dans le boîtier (13) sous déformation de l'élément de positionnement (27, 27', 27"),
**caractérisé en ce que**
l'insertion du guide d'ondes (19) dans l'échancrure (50, 50', 50") de l'élément de positionnement (27, 27', 27") s'effectue dans une direction radiale à travers une fente (52) de l'élément de positionnement (27, 27', 27") qui s'étend le long du trajet de mesure.

15. Procédé selon la revendication 14,
**caractérisé en ce que**
l'élément de positionnement (27, 27', 27") est inséré avec le guide d'ondes (19), logé dans l'échancrure (50, 50', 50"), jusque dans un tube intermédiaire flexible (29) et ensuite il est inséré conjointement avec celui-ci dans le boîtier (13).
